# EUROPÄISCHE PATENTANMELDUNG

(11) **EP 4 678 305 A1**
(43) Veröffentlichungstag der Anmeldung: **14.01.2026**
(21) Anmeldenummer: 25170271.8
(22) Anmeldetag: 14.04.2025
(51) Int. Cl.: B08B 9/46, B08B 13/00, B67C 3/00, G05B 13/04, G05B 23/02

(54) **BEHÄLTERBEHANDLUNGSMASCHINE ZUM BEHANDELN VON BEHÄLTERN**

(30) Priorität: 12.07.2024 DE 102024119907
(71) Anmelder: Krones AG, 93073 Neutraubling (DE)
(72) Erfinder: Redemski-Meyer, Tanja, 93073 Neutraubling (DE); Siegmund, Michael, 93073 Neutraubling (DE)
(74) Vertreter: Grünecker Patent- und Rechtsanwälte PartG mbB

(57) **Zusammenfassung**

Behälterbehandlungsmaschine (100) zum Behandeln von Behältern, die Behälterbehandlungsmaschine umfassend wenigstens zwei Behandlungseinheiten (101, 102, 103) zum Behandeln von Behältern, wenigstens einen Sensor (143, 144) zum Bestimmen eines Zustandsparameters, der indikativ für einen Zustand des Behälters nach und/oder während der Behandlung und/oder für einen Betriebszustand wenigstens einer Behandlungseinheit (101, 102, 103) ist, und eine Steuereinheit (180), wobei die Steuereinheit ausgebildet ist, basierend auf dem Zustandsparameter und einem digitalen Abbild der Behälterbehandlungsmaschine sowie wenigstens einem Betriebsparameter der Behandlungseinheiten (101, 102, 103) festzustellen, ob eine Abweichung im Betrieb der Behälterbehandlungsmaschine vorliegt und welche Ursache die Abweichung besitzt und basierend darauf die Behälterbehandlungsmaschine (100) zu steuern.

## Beschreibung

Die vorliegende Erfindung betrifft eine Behälterbehandlungsmaschine zum Behandeln von Behältern gemäß Anspruch 1 sowie ein Verfahren zum Steuern einer Behälterbehandlungsmaschine gemäß Anspruch 7.

### Stand der Technik

Behälterbehandlungsmaschinen sowie Verfahren zu deren Steuerung sind aus dem Stand der Technik grundsätzlich bekannt. Der Behälterbehandlungsmaschine werden zum Erreichen eines bestimmten Ziels der Behälterbehandlung dabei Betriebsparameter vorgegeben, die dann von der Behälterbehandlungsmaschine im Betrieb genutzt werden, um Behälter zu behandeln. Im Betrieb kann es zu Abweichungen oder Störungen kommen, die sich an Zustandsparametern, die beispielsweise indikativ für den Betrieb der Behälterbehandlungsmaschine selbst sind oder für die behandelten Behälter, zeigen. Dies kann auf Fehler hindeuten und wird üblicherweise von einem Bediener überwacht, so dass, falls nötig, eingegriffen werden kann.

Da die Behälterbehandlungsmaschinen jedoch immer komplexer werden und insbesondere immer mehr Komponenten umfassen, die jeweils eine Abweichung im Betrieb der Behälterbehandlungsmaschine bewirken können, geht die manuelle Überwachung mit erheblichen Schwierigkeiten einher und kann gleichzeitig zu einer zu späten Erkennung von Fehlfunktionen oder einer falschen Erkennung von Ursachen führen.

### Aufgabe

Ausgehend vom bekannten Stand der Technik besteht die zu lösende technische Aufgabe somit darin, eine Behälterbehandlungsmaschine zum Behandeln von Behältern sowie ein Verfahren zum Steuern einer Behälterbehandlungsmaschine anzugeben, mit denen zuverlässig eventuelle Abweichungen im Betrieb erkannt und darauf angemessen reagiert werden kann.

### Lösung

Diese Aufgabe wird erfindungsgemäß durch die Behälterbehandlungsmaschine gemäß Anspruch 1 sowie das Verfahren zum Steuern einer Behälterbehandlungsmaschine gemäß Anspruch 7 gelöst. Vorteilhafte Weiterbildungen der Erfindung sind in den Unteransprüchen erfasst.

Die erfindungsgemäße Behälterbehandlungsmaschine zum Behandeln von Behältern, umfasst wenigstens zwei Behandlungseinheiten zum Behandeln von Behältern, wenigstens einen Sensor zum Bestimmen eines Zustandsparameters, der indikativ für einen Zustand des Behälters nach und/oder während der Behandlung und/oder für einen Betriebszustand wenigstens einer Behandlungseinheit ist, und eine Steuereinheit, wobei die Steuereinheit ausgebildet ist, basierend auf dem Zustandsparameter und einem digitalen Abbild der Behälterbehandlungsmaschine sowie wenigstens einem Betriebsparameter der Behandlungseinheiten festzustellen, ob eine Abweichung im Betrieb der Behälterbehandlungsmaschine vorliegt und welche Ursache die Abweichung besitzt und basierend darauf die Behälterbehandlungsmaschine zu steuern.

Unter einer Steuereinheit ist beispielsweise ein Computer mit zugeordnetem Speicher und Prozessor oder andere geeignete Datenverarbeitungseinrichtung zu verstehen, die mit dem Sensor und der Behälterbehandlungsmaschine in Verbindung steht.

Der Zustandsparameter, der indikativ für einen Zustand des Behälters nach oder während der Behandlung oder für einen Betriebszustand wenigstens einer Behandlungseinheit ist, kann beispielsweise ein physikalischer oder chemischer oder thermischer Parameter des behandelten Behälters sein oder ein solcher Parameter, der während der Behandlung des Behälters bestimmt wird. Alternativ oder zusätzlich kann es sich bei dem Zustandsparameter auch um einen gemessenen Parameter handeln, der für den Betriebszustand der Behandlungseinheit indikativ ist. Grundsätzlich handelt es sich bei dem gemessenen Zustandsparameter um einen Ist-Zustandsparameter, der also den tatsächlichen Zustand der Behandlungseinheit und/oder eines Bauteils einer Behandlungseinheit (beispielsweise eines Antriebs, einer Ventilschaltung oder einer Pumpe) und/oder einer Funktionsgruppe und/oder des Behälters angeben kann. Unter einer Funktionsgruppe ist dabei eine zusammenwirkende Anzahl von Bauteilen und/oder Behandlungseinrichtungen (Behandlungseinheit) zu verstehen. Dies kann beispielsweise einen tatsächlichen Medienfluss oder eine Temperatur oder Ähnliches umfassen, die mit dem Betrieb der Behandlungseinheit verknüpft sind. Weiterhin kann der Zustandsparameter beispielsweise Antriebsmomente, Ventilschaltspiele oder Aufheizkurven umfassen, die für den Betriebszustand einer Behandlungseinheit und/oder einer Funktionsgruppe indikativ sind. Allgemein handelt es sich bei dem Zustandsparameter um gemessene Ist-Werte im Zusammenhang mit der Behälterbehandlungsmaschine und nicht um vorgegebene Parameter, mit denen die Behälterbehandlungsmaschine betrieben wird.

Im Gegensatz dazu sind die Betriebsparameter der Behandlungseinheiten solche Parameter, die beispielsweise von der Steuereinheit zum Betreiben der Behälterbehandlungsmaschine vorgegeben werden. Dazu kann beispielsweise die Heizleistung eines Heizelements, die Durchflussmenge eines Reinigungsmediums einer Reinigungsdüse, Antriebsmomente von Maschinenantrieben oder von Schmutzaustragungssystemen oder von Flaschenaufgaben oder -abgaben, Schaltzyklen und Schaltintervalle für Medienführung, oder Leistungen und/oder Frequenzen für den Betrieb von Pumpen zählen.

Eine Behandlungseinheit ist als jedes Element der Behälterbehandlungsmaschine zu verstehen, das direkt und/oder indirekt chemisch, thermisch und/oder mechanisch auf einen Behälter einwirken kann. Unter einer indirekten Einwirkung ist dabei eine Beeinflussung des Behälterbehandlungsprozesses zu verstehen, bei der die Behandlungseinheit nicht unmittelbar mit dem Behälter selbst wechselwirkt, dessen Behandlung jedoch beeinflusst, wie es beispielsweise Heizelemente eines Tauchbads oder dessen Wasserzufuhr tun. Mögliche Behandlungseinheiten sind beispielsweise Reinigungsdüsen, die ein Reinigungsmedium auf den Behälter ausbringen können oder Ultraschallemitter, die zum Entfernen von Verunreinigungen des Behälters Ultraschall in Richtung auf den Behälter emittieren können. Ferner zählen dazu Behandlungseinheiten, die beispielsweise Etiketten auf Behälter aufbringen oder Druckbilder auf die Oberfläche von Behältern applizieren. Gleichsam zählen dazu beispielsweise Füllorgane, die ein Produkt in einen Behälter einfüllen können oder Ähnliches. Die Erfindung ist hinsichtlich der Behandlungseinheiten nicht beschränkt.

Dass die Steuereinheit die Behälterbehandlungsmaschine basierend auf einer eventuell festgestellten Abweichung steuert, ist so zu verstehen, dass eine Steuerung der Behälterbehandlungsmaschine basierend auf der Feststellung, dass eine Abweichung im Betrieb der Behälterbehandlungsmaschine vorliegt, anders erfolgt als bei der Feststellung, dass keine Abweichung im Betrieb der Behälterbehandlungsmaschine vorliegt.

Das digitale Abbild der Behälterbehandlungsmaschine ist als eine parametrisierte digitale Darstellung der Behälterbehandlungsmaschine und ihres Betriebs zu verstehen. Diese Darstellung umfasst insbesondere die Möglichkeit, ein Behandlungsergebnis oder insbesondere einen Zustandsparameter basierend auf den Betriebsparametern der Behandlungseinheiten der Behälterbehandlungsmaschine zu bestimmen. Eine Feststellung, ob eine Abweichung vorliegt, kann dann aus einem Vergleich zwischen dem mit dem digitalen Abbild der Behälterbehandlungsmaschine bestimmten Zustandsparameter und dem durch den Sensor bestimmten Zustandsparameter bewirkt werden.

Als Ursache der Abweichung können dabei basierend auf dem digitalen Abbild mögliche Veränderungen der Betriebsparameter oder mögliche Veränderungen im Verhalten der Maschine, die indirekt mit einem Betriebsparameter zusammenhängen, bestimmt werden.

Mit der erfindungsgemäßen Behälterbehandlungsmaschine ist eine fortlaufende Überprüfung auf Abweichungen im Betrieb der Behälterbehandlungsmaschine möglich. Hiermit können Fehler oder bevorstehende Fehler im Betrieb der Behälterbehandlungsmaschine rechtzeitig und zuverlässig erkannt und trotz großer Komplexität der Behälterbehandlungsmaschine identifiziert werden. Dies erlaubt ein zielgerichtetes Eingreifen in den Betrieb der Behälterbehandlungsmaschine, falls Probleme auftreten. Weiterhin ist zum Beispiel ein Überwachen des Zustands der Behälterbehandlungsmaschine möglich, welches eine Ausgabe des Fehlers und/oder einer Mitteilung an Dritte (beispielsweise an die Instandhaltung zum Planen von optimierten Wartungs- und Instandhaltungsmaßnahmen) umfassen kann.

Es kann vorgesehen sein, dass das Steuern der Behälterbehandlungsmaschine ein Verändern wenigstens eines Betriebsparameters und/oder eine für die festgestellte Abweichung indikative Ausgabe an einen Bediener umfasst.

Das Verändern des Betriebsparameters kann insbesondere so erfolgen, dass die Abweichung reduziert oder ganz beseitigt wird, etwa indem die identifizierte Ursache adressiert wird. Die Ausgabe kann eine Ausgabe technischer Informationen, die die Abweichung und/oder die Ursache und/oder mögliche Lösungsvorschläge für das Ausräumen der Abweichung umfassen, enthalten und kann insbesondere eine grafische Ausgabe auf einem Benutzerinterface, wie einem Monitor, umfassen.

Mit dieser Ausführungsform wird der fortlaufende Betrieb auch bei eventuell auftretenden Abweichungen während des Betriebs sichergestellt.

Die Steuereinheit kann ausgebildet sein, unter Verwendung eines Vorhersagemoduls umfassend ein Wahrscheinlichkeitsmodell oder ein neuronales Netz oder eine Fuzzy Logic festzustellen, ob eine Abweichung vorliegt und welche Ursache die Abweichung besitzt.

Das Vorhersagemodul ist als ein Softwarebaustein oder Softwaremodul zu verstehen. Das Wahrscheinlichkeitsmodell ist als ein geschlossenes, mathematisches und deterministisches Modell (bzw. zugehöriger Programmcode) zu verstehen, mit dem basierend auf den Zustandsparametern sowie dem digitalen Abbild und den aktuellen Betriebsparametern der Behandlungseinheiten eine Ausgabe möglicher Abweichungen und bevorzugt eine Ausgabe der potenziellen Ursache der Abweichung mit einem zugeordneten Wahrscheinlichkeitswert bestimmt werden kann.

Als neuronales Netz kann ein spezifisch mit Hinblick auf die Bestimmung der Abweichung aus den Zustandsparametern, dem digitalen Abbild und den Behandlungsparametern trainiertes neuronales Netz verwendet werden. Hierzu sind neuronale Netze, die für die Mustererkennung in Betriebsparametern benutzt werden können, grundsätzlich aus dem Stand der Technik bekannt. Die Verwendung von einem Wahrscheinlichkeitsmodell oder einem neuronalen Netz oder einer Fuzzy Logic erlaubt auch bei komplexen Systemen eine zuverlässige Identifizierung der Ursache einer möglichen Abweichung sowie das Feststellen der Abweichung selbst.

Insbesondere kann das Vorhersagemodul ausgebildet sein, basierend auf festgestellten Abweichungen im Betrieb der Behälterbehandlungsmaschine zu lernen.

Mit dieser Ausführungsform kann auch im fortlaufenden Betrieb das Vorhersagemodul beispielsweise auf eintretenden Verschleiß von Komponenten oder Behandlungseinheiten der Behälterbehandlungsmaschine sensitiv reagieren, so dass Abweichungen auch bei langer Betriebsdauer zuverlässig identifiziert werden können.

Es kann vorgesehen sein, dass die Abweichung für einen Betriebsfehler oder einen bevorstehenden Betriebsfehler indikativ ist.

Als Betriebsfehler wird ein tatsächlich eintretender Fehler im Betrieb der Maschine verstanden. Dies kann den Ausfall einer Behandlungseinheit oder ein einen bestimmten Grenzwert überschreitenden oder unterschreitenden Zustandsparameter eines Behälters umfassen. Indikativ für einen bevorstehenden Betriebsfehler ist die Abweichung dann, wenn trotz einer Abweichung der Betrieb der Maschine noch innerhalb festgelegter Grenzen funktioniert (beispielsweise der Zustandsparameter noch innerhalb der Grenzwerte liegt oder zwischen einem ersten Grenzwert, der eine Abweichung kennzeichnet, und einem zweiten Grenzwert, der einen Betriebsfehler kennzeichnet, liegt). Mit dieser Ausführungsform kann nicht nur auf auftretende Fehler zuverlässig reagiert werden, sondern potenzielle Betriebsfehler vermieden werden bzw. rechtzeitig in den Betrieb der Behälterbehandlungsmaschine eingegriffen werden, um schwerwiegende Betriebsfehler zu vermeiden.

Die Behälterbehandlungsmaschine kann eine Reinigungsmaschine sein oder eine Reinigungsmaschine umfassen.

Da Reinigungsmaschinen (hier gleichbedeutend mit Behälterreinigungsmaschinen verwendet) üblicherweise eine große Vielzahl von Behandlungseinheiten umfassen, können die Vorteile der Erfindung bei Realisierung im Rahmen einer Behälterbehandlungsmaschine als Behälterreinigungsmaschine besonders vorteilhaft genutzt werden.

Erfindungsgemäß ist weiterhin ein Verfahren zum Steuern einer Behälterbehandlungsmaschine vorgesehen, die Behälterbehandlungsmaschine umfassend wenigstens zwei Behandlungseinheiten zum Behandeln von Behältern, wenigstens einen Sensor zum Bestimmen eines Zustandsparameters, der indikativ für einen Zustand des Behälters nach oder während der Behandlung oder für einen Betriebszustand wenigstens einer Behandlungseinheit ist, und eine Steuereinheit, wobei die Steuereinheit basierend auf dem Zustandsparameter und einem digitalen Abbild der Behälterbehandlungsmaschine sowie wenigstens einem Betriebsparameter der Behandlungseinheiten feststellt, ob eine Abweichung im Betrieb der Behälterbehandlungsmaschine vorliegt und welche Ursache die Abweichung besitzt und basierend darauf die Behälterbehandlungsmaschine steuert.

Mit diesem Verfahren ist ein zuverlässiger Betrieb einer Behälterbehandlungsmaschine auch bei eventuell auftretenden Abweichungen realisiert.

Es kann vorgesehen sein, dass das Steuern der Behälterbehandlungsmaschine ein Verändern wenigstens eines Betriebsparameters und/oder eine für die festgestellte Abweichung indikative Ausgabe an einen Bediener umfasst.

Durch diese Ausführungsform können auftretende Abweichungen zuverlässig ausgeräumt werden.

Im Rahmen der zweiten Alternative kann vorgesehen sein, dass die Ausgabe eine Ausgabe von wenigstens zwei möglichen Ursachen für die Abweichung umfasst. Hiermit wird dem Bediener eine Anleitung zur Verfügung gestellt, um die mögliche Fehlersuche zu optimieren.

In einer Ausführungsform ist vorgesehen, dass die Steuereinheit unter Verwendung eines Vorhersagemoduls umfassend ein Wahrscheinlichkeitsmodell oder ein neuronales Netz oder eine Fuzzy Logic feststellt, ob eine Abweichung vorliegt und welche Ursache die Abweichung besitzt. Diese Ausführungsform realisiert eine zuverlässige Feststellung von Abweichungen sowie deren Ursachen.

Das Vorhersagemodul kann basierend auf festgestellten Abweichungen im Betrieb der Behälterbehandlungsmaschine lernen. Diese Ausführungsform erlaubt eine Anpassung des Vorhersagemoduls, so dass es beispielsweise auch bei andauerndem Betrieb etwaige Verschleißerscheinungen berücksichtigen kann, um Abweichungen festzustellen.

Das Vorhersagemodul und/oder das digitale Abbild können bei einer Inbetriebnahme der Behälterbehandlungsmaschine verifiziert werden.

Die Inbetriebnahme kann beispielsweise die erstmalige Inbetriebnahme der Behälterbehandlungsmaschine im Rahmen von kontrollierten Testläufen der Behälterbehandlungsmaschine und/oder deren Funktionsgruppen und/oder deren Bauteilen sein und/oder eine erneute Inbetriebnahme der Behälterbehandlungsmaschine beispielsweise nach einem bestimmten Wartungsintervall oder einer Sortenumstellung umfassen. Das Verifizieren des Vorhersagemodells und/oder des digitalen Abbilds kann hier insbesondere ein Einstellen der das Vorhersagemodell oder das Abbild kennzeichnenden Parameter umfassen, so dass mit diesen zuverlässig in einer kontrollierten Umgebung vorliegende Abweichungen von einem korrekten Betrieb unterschieden werden können.

Durch diese Ausführungsform wird ein auf die Behälterbehandlungsmaschine spezifisch angepasstes Vorhersagemodul realisiert, womit eine zuverlässigere Feststellung von Abweichungen und deren Ursachen möglich ist.

Es kann vorgesehen sein, dass die Abweichung für einen Betriebsfehler oder einen bevorstehenden Betriebsfehler indikativ ist.

Sowohl die Behandlung tatsächlicher Fehler der Behälterbehandlungsmaschine als auch eine vorsorgliche Veränderung des Betriebs der Behälterbehandlungsmaschine bei bevorstehenden Betriebsfehlern werden hiermit ermöglicht.

Die Behälterbehandlungsmaschine kann eine Reinigungsmaschine sein oder eine Reinigungsmaschine umfassen. Mit dieser Ausführungsform werden die Vorteile des erfindungsgemäßen Verfahrens auf Reinigungsmaschinen, die üblicherweise eine Vielzahl von Behandlungseinheiten umfassen, vorteilhaft angewandt.

Das Verfahren kann ein Feststellen von einer Abweichung für jeden behandelten Behälter oder in vorgegebenen zeitlichen Abständen während des Betriebs der Behälterbehandlungsmaschine umfassen.

Das Feststellen möglicher Abweichungen für jeden behandelten Behälter kann eine verbesserte Feststellung von Abweichungen erlauben. Das Feststellen von Abweichungen in vorgegebenen zeitlichen Abständen, wie beispielsweise mehreren Minuten oder mehreren Stunden, reduziert den Rechenaufwand und kann dennoch gleichzeitig eine zuverlässige Feststellung von Abweichungen, die die Behandlung aller Behälter betreffen, ermöglichen.

### Kurze Beschreibung der Figuren

- Fig. 1: zeigt eine schematische Ansicht einer Behälterbehandlungsmaschine,
- Fig. 2: zeigt ein Fließschema eines Verfahrens zum Steuern einer Behälterbehandlungsmaschine.

### Ausführliche Beschreibung

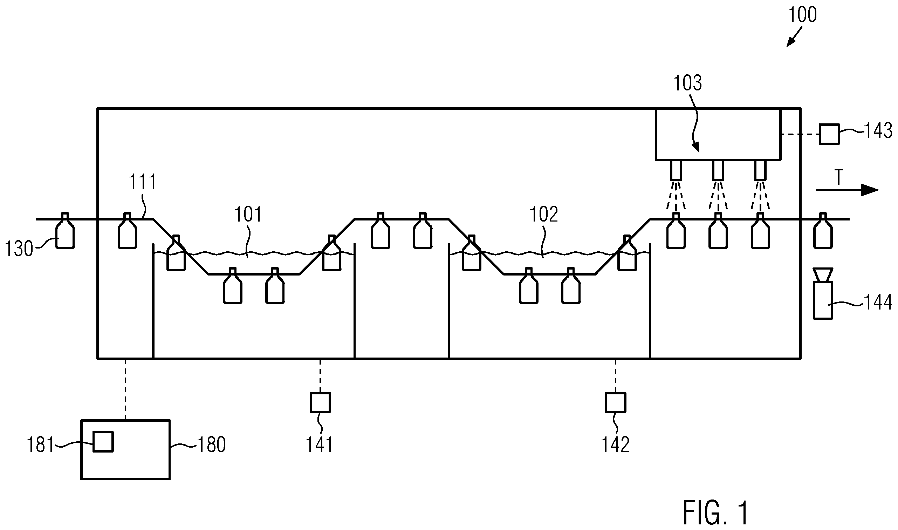

Fig. 1 zeigt eine Behälterbehandlungsmaschine 100 gemäß einer Ausführungsform. In der Darstellung der Fig. 1 ist die Behälterbehandlungsmaschine 100 als Behälterreinigungsmaschine (auch Reinigungsmaschine) dargestellt. Diese Ausgestaltung ist nicht zwingend und die Erfindung ist auch auf sämtliche andere Behälterbehandlungsmaschinen, wie beispielsweise Blasformmaschinen, Druckmaschinen, Etikettiermaschinen, Inspektionsmaschinen oder Füller, anwendbar.

Die Behälterbehandlungsmaschine 100 umfasst allgemein wenigstens zwei, bevorzugt eine Vielzahl von Behandlungseinheiten 101, 102 und 103, mit denen Behälter 130, wie beispielsweise Flaschen oder Dosen oder dergleichen, behandelt werden können. Dazu kann die Behälterbehandlungsmaschine 100 beispielsweise eine Transporteinrichtung 111 umfassen, entlang der die Behälter 130 durch die Behälterbehandlungsmaschine und optional weitere Maschinen entlang der Transportrichtung T transportiert werden. In der hier dargestellten Ausführungsform der Behälterreinigungsmaschine werden die Behälter 130 in der Transportrichtung T entlang einer im Wesentlichen linearen Transporteinrichtung 111 gefördert, die die Behälter 130 beispielsweise im Neck-Handling-Verfahren transportieren kann. Auch andere Ausführungsformen sind denkbar, bei denen die Behälter 130 beispielsweise zumindest teilweise durch Transfersterne einer Behälterbehandlungsmaschine in Form eines um eine Rotationsachse drehbar gelagerten Karussells zugefördert werden und von dieser Behälterbehandlungsmaschine beispielsweise erneut über Transfersterne abgefördert werden. Die Erfindung ist hinsichtlich der Transporteinrichtungen, die einen Transport der Behälter ausführen, nicht beschränkt.

Die Behälterbehandlungsmaschine 100 umfasst weiterhin wenigstens einen Sensor 141, 142, 143 oder 144, der ausgebildet ist, einen Zustandsparameter zu bestimmen. Während hier von Sensoren die Rede ist, versteht es sich, dass jeder dieser Sensoren 141, 142, 143 und 144 auch als eine Gruppe von Sensoren verstanden werden kann, die entweder dieselben oder unterschiedliche physikalische und/oder chemische Größen messen können.

Der Zustandsparameter ist dabei indikativ für einen Zustand eines Behälters oder einen Betriebszustand wenigstens einer Behandlungseinheit. Der Zustand eines Behälters kann beispielsweise eine Eigenschaft des Behälters nach einer Behandlung mit einer Behandlungseinheit oder während der Behandlung mit einer Behandlungseinheit charakterisieren. Als indikativ für einen Betriebszustand kann ein Zustandsparameter dann verstanden werden, wenn er einen chemischen oder physikalischen Ist-Parameter der Behälterbehandlungsmaschine angibt oder für diesen indikativ ist (wie beispielsweise eine tatsächliche Temperatur eines Tauchbades). Es ist auch denkbar, dass eine Vielzahl von Zustandsparametern aufgenommen werden, die jeweils für sich genommen entweder indikativ für den Zustand des Behälters und/oder den Betriebszustand der Behandlungseinheit sind. Der Zustandsparameter, der indikativ für den Betriebszustand einer Behandlungseinheit ist, kann beispielsweise ein Ist-Wert einer physikalischen oder chemischen Größe sein.

Am Beispiel der Behälterreinigungsmaschine als Ausführungsform der Behälterbehandlungsmaschine 100 in Fig. 1 können beispielsweise die ersten zwei Behandlungseinheiten in Transportrichtung T der Behälter Tauchbäder sein, durch die die Behälter 130 geführt werden. Die Sensoren 141 und 142 können beispielsweise als Temperatursensoren ausgebildet sein, die die aktuelle Temperatur des Mediums, wie beispielsweise warmes Wasser, in den einzelnen Tauchbädern 101 und 102 messen können. Einer der Sensoren 141 und 142 oder auch beide können jedoch auch eine chemische Zusammensetzung des Tauchmediums in den Tauchbädern bestimmen oder dies zusätzlich oder alternativ zu der Temperaturbestimmung vorsehen. Alternativ oder zusätzlich können Sensoren vorgesehen sein, die beispielsweise eine abgegebene Wärmemenge eines Heizelements im Bereich des Tauchbads zum Erwärmen des Tauchmediums messen und/oder eine Durchflussmenge des Tauchmediums, beispielsweise durch ein Ventil, messen.

Stromab der Tauchbäder 101 und 102 sind hier beispielhaft als weitere Behandlungseinheit 100 Düsen vorgesehen, die ein Medium auf die Behälter 130 ausbringen können. Bei diesem Medium kann es sich beispielsweise um kaltes oder warmes Wasser oder Lauge oder Ähnliches handeln. Ein dieser Behandlungseinheit 103 zugeordneter Sensor 143 kann beispielsweise eine Durchflussmenge oder Ausbringmenge des Mediums aus den jeweiligen Düsen messen. Alternativ oder zusätzlich kann eine Temperaturmessung oder Messung der chemischen Zusammensetzung des Mediums vorgesehen sein.

Stromab der Behandlungseinheit 103 ist ein weiterer Sensor 144 beispielsweise in Form eines optischen Sensors zum optischen Inspizieren der Behälter 130 vorgesehen. Der optische Sensor kann beispielsweise eine Kamera etwa in Form einer CCD-Kamera sein und Bilder von Behältern aufnehmen, so dass diese im Fall einer Reinigungsmaschine beispielsweise auf bestehende Verunreinigungen hin überprüft werden können.

Wie bereits erwähnt, ist die Ausgestaltung der Behälterbehandlungsmaschine 100 als Behälterreinigungsmaschine so nicht zwingend. Es können auch andere Ausführungsformen, wie beispielsweise eine Etikettiermaschine, vorgesehen sein. Im Falle der Etikettiermaschine kann eine erste Behandlungseinheit beispielsweise Leim auf die Oberfläche von Behältern oder Etiketten in bekannter Weise applizieren. Ein Sensor kann beispielhaft vorgesehen sein, der die Temperatur des aufgebrachten Leims oder des Leims in einem Vorlagebehälter bestimmt, um so einen Zustandsparameter zu bestimmen (die jeweilige Temperatur des Leims). Stromab einer Aufbringungseinrichtung der Etikettiermaschine, die das Etikett auf den Behälter aufbringt, kann erneut als Sensor beispielsweise eine Kamera angeordnet sein, die ein Bild des etikettierten Behälters aufnimmt, so dass als Zustandsparameter im Wesentlichen die Bildinformation dienen kann, die beispielsweise genutzt werden kann, um später festzustellen, ob das Etikett korrekt auf dem Behälter 130 positioniert ist.

Die Behälterbehandlungsmaschine 100 umfasst weiterhin eine Steuereinheit 180 (wie etwa einen Computer umfassend einen Prozessor und zugeordneten Speicher). Die Steuereinheit 180 ist erfindungsgemäß ausgebildet, um basierend auf wenigstens einem Zustandsparameter und einem digitalen Abbild der Behälterbehandlungsmaschine sowie wenigstens einem Betriebsparameter der Behandlungseinheiten festzustellen, ob eine Abweichung im Betrieb der Behälterbehandlungsmaschine vorliegt und welche Ursache die Abweichung besitzt, und basierend darauf die Behälterbehandlungsmaschine 100 zu steuern.

Zu diesem Zweck kann die Steuereinheit ein Vorhersagemodul 181 umfassen, das beispielsweise ein Wahrscheinlichkeitsmodell oder ein neuronales Netz umfasst, um festzustellen, ob eine Abweichung vorliegt und welche Ursache die Abweichung besitzt.

Dazu ist das digitale Abbild der Behälterbehandlungsmaschine bevorzugt so ausgebildet, dass es die Zustandsparameter, wie oben beschrieben, aus den Betriebsparametern der Behälterbehandlungseinheiten ermitteln kann. Damit werden Soll-Zustandsparameter basierend auf aktuellen Betriebsparametern mittels des digitalen Abbilds bestimmt. Diese können mit den von den Sensoren gemessenen oder bestimmten Zustandsparametern verglichen werden. Aus einer Abweichung zwischen den Soll-Zustandsparametern und den mit den Sensoren bestimmten Zustandsparametern kann dann unter Verwendung eines Wahrscheinlichkeitsmodells oder eines neuronalen Netzes oder einer Fuzzy Logic oder eines Zeitmodells festgestellt werden, ob eine Abweichung vorliegt und/oder welche Ursache diese Abweichung besitzt.

Ein Zeitmodell beschreibt dabei die Gültigkeit von Aussagen und Formeln in einem bestimmten Zeitrahmen. Beispielsweise kann ein Zeitmodell die Beziehung zwischen verschiedenen Ereignissen oder Zuständen im Laufe der Zeit darstellen.

Dabei kann vorgesehen sein, dass der Vergleich zwischen den bestimmten Zustandsparametern und den Soll-Zustandsparametern basierend auf dem digitalen Abbild als keine Abweichung anzeigend angesehen wird, wenn eine Differenz zwischen den bestimmten Zustandsparametern und den Soll-Zustandsparametern einen bestimmten Grenzwert nicht überschreitet oder unterschreitet oder innerhalb eines bestimmten erlaubten Parameterbereichs definiert durch einen unteren und einen oberen Grenzwert um einen Soll-Zustandsparameter herum liegt. Ist die Abweichung der bestimmten Zustandsparameter von den Soll-Zustandsparametern größer als die Abweichung, die durch die Grenzwerte erlaubt ist, kann die Steuereinheit zunächst eine Abweichung feststellen. Anschließend kann durch das neuronale Netz oder das Wahrscheinlichkeitsmodell oder die Fuzzy Logic des Vorhersagemoduls die mögliche oder die möglichen Ursachen dieser Abweichung identifiziert werden.

Wird beispielsweise festgestellt, dass für eine Anzahl von Behältern stets eine Abweichung bei einem bestimmten, einer bestimmten Behandlungseinheit zugeordneten Zustandsparameter auftritt, kann dies von dem Vorhersagemodul als Ursache identifiziert werden, so dass ein bestimmtes Behandlungsmodul als Ursache für die Abweichung identifiziert wird. Ist beispielsweise vorgesehen, dass die Behandlungseinheit 103, die die Behälter mit einem Medium besprüht, Behälter immer gruppenweise besprüht, so dass beispielsweise eine Gruppe von 10 Behältern mit 10 Düsen mit Medium beaufschlagt werden, wobei jede Düse genau einen Behälter mit Medium beaufschlagt, und ist jeder dritte Behälter nachfolgender Gruppen anhand einer Messung mit dem Sensor 144 als nicht ausreichend sauber identifiziert worden, so kann als Ursache mit großer Wahrscheinlichkeit die dritte Düse der Behandlungseinheit identifiziert werden.

Weisen dagegen beispielsweise alle Behälter, die durch das Tauchbad 102 hindurchgeführt wurden, einen Rest von Natriumhydroxid auf, der außerhalb eines bestimmten Grenzwertes liegt, so kann dies auf die Zusammensetzung des Tauchbads als Ursache zurückgeführt werden. Dies kann durch ein geeignetes Wahrscheinlichkeitsmodell oder ein spezifisch zu diesem Zweck trainiertes neuronales Netz festgestellt werden, indem beispielsweise durch Variation der Betriebsparameter im digitalen Abbild versucht wird, den oder die bestimmten Zustandsparameter zu reproduzieren.

Die erfindungsgemäße Behälterbehandlungsmaschine 100 wird dann basierend auf der festgestellten Abweichung und der identifizierten Ursache gesteuert, wobei das Steuern beispielsweise das Verändern eines oder mehrerer Betriebsparameter der Behälterbehandlungsmaschine basierend auf der identifizierten Ursache und/oder das Ausgeben von für die Abweichung und/oder die Ursache indikativen Informationen, beispielsweise an einen Bediener, mittels einer grafischen Anzeige umfassen kann.

Ist ein Verändern von Betriebsparametern basierend auf der festgestellten Abweichung und der identifizierten Ursache vorgesehen, so kann vorgesehen sein, dass nur die Betriebsparameter geändert werden, die auf die gemessene Abweichung Einfluss haben. Dies kann durch Variieren der Betriebsparameter, die mit der identifizierten Ursache zusammenhängen, im Rahmen des digitalen Abbilds erfolgen, um festzustellen, ob eine bestimmte Variation von Betriebsparametern die Abweichung auflöst.

Zusätzlich oder alternativ kann vorgesehen sein, dass bei einer Ausgabe von Informationen hinsichtlich der Ursache der Abweichung dem Bediener nicht nur Informationen zur Ursache und der Abweichung selbst übermittelt werden, sondern zusätzlich beispielsweise mögliche Lösungsstrategien. In Anwendung des obigen Beispiels kann beispielsweise vorgesehen werden, dass neben einer Information darüber, dass wahrscheinlich die dritte Spritzdüse der Düsenreihe defekt ist, eine Anleitung zur Wartung oder zum Austausch der Düse einem Bediener angezeigt wird.

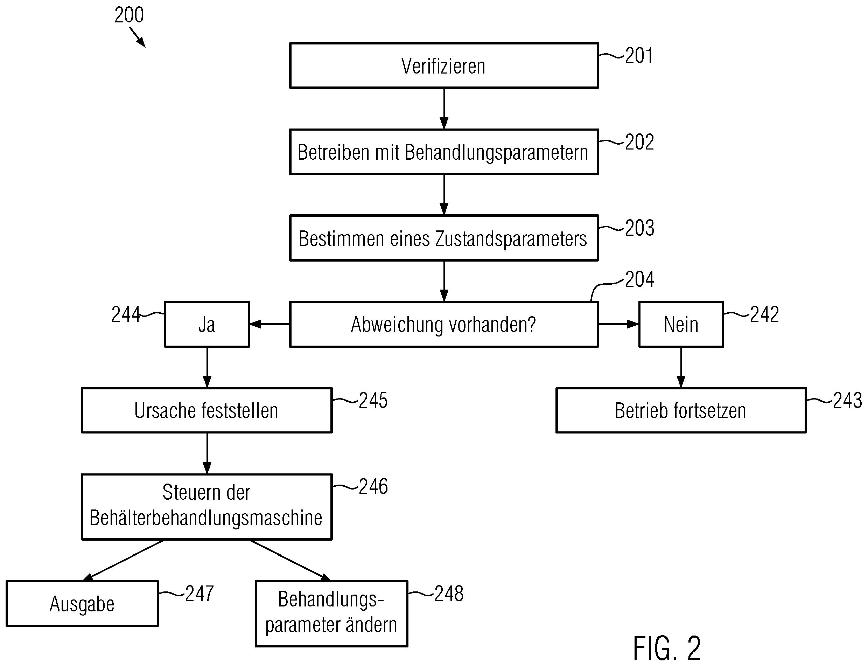

Fig. 2 zeigt eine Ausführungsform eines Verfahrens zum Steuern einer Behälterbehandlungsmaschine, wie sie im Zusammenhang mit den Ausführungsformen der Figur 1 beschrieben wurde.

Das Verfahren 200 kann mit einem optionalen Schritt eines Verifizierens eines Vorhersagemoduls und/oder digitalen Abbilds entsprechend der Fig. 1 beginnen. Der Schritt 201 des Verifizierens kann beispielsweise durchgeführt werden, wenn die Behälterbehandlungsmaschine zum ersten Mal in Betrieb genommen wird, beispielsweise nach Aufbau bei einem Kunden.

Im Rahmen des Schritts 201 wird die Behälterbehandlungsmaschine dabei unter kontrollierten Bedingungen betrieben und Behälter behandelt. Gleichzeitig werden die Zustandsparameter aufgenommen, die bei diesem kontrollierten Betrieb gemessen werden, so dass das digitale Abbild für eine bestimmte Kombination von Betriebsparametern bestimmte Zustandsparameter als Soll-Zustandsparameter bestimmen kann.

Anschließend kann eine Reihe von Grenzwerten festgelegt werden oder aus diesem kontrollierten Betrieb abgeleitet werden, die beispielsweise im Rahmen des Vorhersagemoduls genutzt werden können.

Ferner kann der Schritt 201 umfassen, dass im Rahmen des kontrollierten Betriebs gezielt Abweichungen induziert werden, indem beispielsweise eine Behandlungseinheit deaktiviert wird oder ein Ventil blockiert wird oder Ähnliches, so dass Abweichungen mit definierter Ursache bewirkt werden. Dann werden die sich ergebenden Zustandsparameter gemessen. Anschließend kann das Vorhersagemodul beispielsweise unter Verwendung des Wahrscheinlichkeitsmodells oder des neuronalen Netzes angesprochen werden, um die Ursache der Abweichung zu identifizieren.

Dies kann im Rahmen eines neuronalen Netzes als üblicher Lernvorgang wiederholt ausgeführt werden, um so das neuronale Netz auf das Erkennen von Ursachen anhand einer bestimmten Kombination von Betriebsparametern und bestimmten (also mit den Sensoren gemessenen) Zustandsparametern zu trainieren. Das Wahrscheinlichkeitsmodell, das als deterministischer Algorithmus vorliegen kann, kann hier ebenfalls durch Anpassen der Parameter des Wahrscheinlichkeitsmodells angepasst werden.

Hiermit wird sichergestellt, dass das digitale Abbild als korrektes, digitales Abbild der tatsächlich in Betrieb genommenen Behälterbehandlungsmaschine dient und die Behälterbehandlungsmaschine mit großer Genauigkeit abbildet bzw. simuliert. Gleichzeitig wird das Vorhersagemodul so eingerichtet, dass ein zuverlässiges Erkennen von Abweichungen bzw. deren Ursachen ermöglicht wird.

Anschließend kann der reguläre Betrieb der Behälterbehandlungsmaschine beginnen.

Im Schritt 202 wird die Behälterbehandlungsmaschine dann mit gewählten Betriebsparametern betrieben, so dass Behälter behandelt werden können. Es kann dann vorgesehen sein, dass für jeden Behälter oder in bestimmten zeitlichen Abständen oder Kombinationen davon Zustandsparameter im Schritt 203 bestimmt werden. Beispielsweise kann vorgesehen sein, dass die einem Behälter zugeordneten Zustandsparameter für jeden Behälter bestimmt werden. Die Zustandsparameter, die indikativ für den Betriebszustand der jeweiligen Behandlungseinheiten sind, können entweder ebenfalls bei jedem Behandlungsschritt, der an einem Behälter durchgeführt wird, bestimmt werden oder in bestimmten zeitlichen Abständen, beispielsweise von mehreren Sekunden oder mehreren Minuten oder mehreren Stunden, ermittelt werden.

Handelt es sich bei der Behandlungseinheit beispielsweise um ein Tauchbad, das sämtliche durch das Tauchbad hindurchgeführte Behälter auf die gleiche Weise oder auf die im Wesentlichen gleiche Weise behandelt, sofern keine Abweichung vorliegt, kann es genügen, wenn der Zustandsparameter des Tauchbades oder die Zustandsparameter des Tauchbades im Schritt 203 nicht für jeden in das Tauchbad eingeführte Behälter bestimmt werden, sondern beispielsweise nur alle 10 Minuten bestimmt werden. Hingegen kann ein Zustandsparameter, der direkt an einem Behälter nach Verlassen des Tauchbades bestimmt wird, für jeden durch das Tauchbad geführte Behälter bestimmt werden.

Anschließend wird im Schritt 204 durch die Steuereinheit unter Verwendung der bestimmten Zustandsparameter aus dem Schritt 203 sowie der eingestellten Betriebsparameter aus dem Schritt 202 und dem digitalen Abbild der Behälterbehandlungsmaschine bestimmt, ob eine Abweichung vorliegt. Wie bereits erwähnt, kann dies beispielsweise durch Vergleich der bestimmten Zustandsparameter aus dem Schritt 203 und den aus dem digitalen Abbild unter Verwendung der Behandlungsparameter abgeleiteten Soll-Zustandsparameter erfolgen, indem beispielsweise festgestellt wird, ob eine gemessene Abweichung zwischen den Soll-Zustandsparametern und den bestimmten Zustandsparametern innerhalb vorgegebener Grenzen liegt oder ein Grenzwert überschritten wird.

Wird im Schritt 204 festgestellt, dass keine Abweichung vorliegt, 242, kann der reguläre Betrieb der Behälterbehandlungsmaschine im Schritt 243 fortgesetzt werden. Dem Schritt 243 kann sich dann erneut das Bestimmen von Zustandsparametern entsprechend des Schrittes 203 anschließen, so dass die Prüfung hinsichtlich möglicher Abweichungen fortgesetzt werden kann.

Wird hingegen im Schritt 204 festgestellt, dass eine Abweichung vorliegt, 244, wird im nächsten Schritt 245 unter Verwendung des Vorhersagemoduls versucht, die Ursache der Abweichung festzustellen. Dies kann wie bereits beschrieben beispielsweise unter Verwendung eines Wahrscheinlichkeitsmodells oder eines neuronalen Netzes erfolgen, die das Ergebnis des digitalen Abbildes verwenden können. Beispielsweise kann durch mehrmaliges Variieren von Betriebsparametern im digitalen Bild untersucht werden, ob die gemessene Abweichung reproduziert werden kann. Dadurch kann festgestellt werden, ob eine Variation eines oder mehrerer Betriebsparameter zu der gemessenen Abweichung führt.

Es ist hierdurch nicht mehr erforderlich, dass für jeden eingestellten Betriebsparameter ein Sensor vorgesehen ist, der prüft, ob der voreingestellte Betriebsparameter tatsächlich erreicht wird. So ist es beispielsweise im obigen Beispiel einer nicht funktionierenden Düse nicht zwingend erforderlich, dass ein Sensor vorgesehen ist, der bestimmen kann, ob Medium aus der Düse austritt.

Durch das Variieren von Betriebsparametern, um die Abweichung zu reduzieren (indem die Betriebsparameter im digitalen Abbild so variiert werden, dass der oder die gemessenen Zustandsparameter erreicht werden), kann dann festgestellt werden, worin die Ursache der Abweichung liegt oder worin die Ursache der Abweichung wahrscheinlich liegt. Dabei kann bei mehreren möglichen Ursachen den jeweiligen Ursachen auch ein Wahrscheinlichkeitswert zugeordnet werden, der angibt, wie hoch die Wahrscheinlichkeit dafür ist, dass die angegebene Ursache die tatsächliche Ursache der Abweichung ist.

Ist die der Abweichung zugeordnete Ursache (oder mehrere Ursachen) festgestellt, kann in einem nächsten Schritt 246 ein Steuern der Behälterbehandlungsmaschine erfolgen.

Dies kann umfassen, dass im Schritt 247 eine Ausgabe der Abweichung und/oder der identifizierten Ursache für die Abweichung an einen Bediener erfolgt. Dies kann beispielsweise auf einem Display der Behälterbehandlungsmaschine durch grafische Darstellungen, wie beispielsweise Text oder eine farbliche Indikation an einem grafischen Abbild der Behälterbehandlungsmaschine im Bereich der identifizierten Ursache erfolgen. Hiermit wird dem Bediener auf einfache Weise eine Möglichkeit gegeben, die mögliche Ursache einer Fehlfunktion zu identifizieren und gegebenenfalls geeignete Schritte zu unternehmen.

Alternativ oder zusätzlich kann vorgesehen sein, dass im Schritt 248 Behandlungsparameter bzw. Betriebsparameter der Behälterbehandlungsmaschine verändert werden, um die Abweichung auszuräumen.

Dabei kann in einer Ausführungsform vorgesehen sein, dass Behandlungsparameter oder Betriebsparameter der Behälterbehandlungsmaschine nur dann automatisch verändert werden, wenn die Ursache für die Abweichung eindeutig feststeht, um zu verhindern, dass eine Veränderung der Betriebsparameter weitere Abweichungen produziert, aber die ursprüngliche Ursache der Abweichung nicht beseitigt.

Steht beispielsweise als Ursache fest, dass die Temperatur des Tauchbades zu niedrig ist, kann automatisch eine Nachregelung der Temperatur des Tauchbads beispielsweise durch Einschalten von Heizelementen oder Erhöhen von deren Leistung bewirkt werden. Wird hingegen mit nicht absoluter Sicherheit, beispielsweise nur einer Wahrscheinlichkeit von 80 %, eine bestimmte Ursache identifiziert und kann eine weitere Ursache mit einer Wahrscheinlichkeit von 20 % für die Abweichung verantwortlich sein, so kann im Schritt 246 vorgesehen sein, dass ein Ändern der Betriebsparameter nicht erfolgt, aber eine entsprechende Information über die Ausgabe 247 an einen Bediener übermittelt wird. Dieser kann beispielsweise angewiesen werden, zwei verschiedene Behandlungseinheiten zu prüfen, um festzustellen, worin der Fehler tatsächlich liegt.

Während die vorangegangen beschriebene Ausführungsform im Wesentlichen darauf gerichtet ist, dass eine Abweichung in einem Fehler bzw. einem Betriebsfehler der Behälterbehandlungsmaschine resultiert, wie beispielsweise eine tatsächlich ausgefallene Spritzdüse, kann das voranstehende Verfahren auch genutzt werden, um bevorstehende Betriebsfehler im Betrieb der Behälterbehandlungsmaschine vorherzusagen und diese gegebenenfalls zu vermeiden.

Am Beispiel der defekten Düse kann beispielsweise vorgesehen sein, dass ein Zustandsparameter den Medienverbrauch an Medium, das durch die Spritzdüsen ausgebracht wird, ist. Ein zugehöriger Betriebsparameter kann beispielsweise eine Durchflussmenge durch die einzelnen Düsen charakterisieren. Wird festgestellt, dass der Medienverbrauch reduziert ist, kann dies beispielsweise darauf hindeuten, dass eine oder mehrere der Düsen zumindest teilweise blockiert sind. Alternativ kann ein gleichbleibender Verbrauch an Medium aber ein leicht abweichendes Reinigungsergebnis (als Zustandsparameter) bedeuten, dass eine Düse teilweise blockiert ist und gleichzeitig in einer Zuführleitung ein Leck vorliegt. Dies muss noch nicht gleichbedeutend damit sein, dass das Reinigungsergebnis von Behältern nachteilig beeinflusst wird, kann jedoch darauf hindeuten, dass in naher Zukunft ein Ausfall einer oder mehrerer der Düsen droht oder eine Leitung bricht. In einem solchen Fall kann als Ursache für die festgestellte Abweichung im Reinigungsergebnis oder dem Medienverbrauch ein mögliches Verstopfen oder teilweise Blockieren von Düsen und/oder Leckage identifiziert werden und als Ursache 245 festgestellt werden. In der Ausgabe 247 kann dann beispielsweise als mögliche Ursache ein zumindest teilweises Verstopfen einer oder mehrerer Düsen und eine Leckage in einer Zuführleitung angegeben werden und dem Bediener signalisiert werden, dass ein Reinigen der Düsen oder zumindest Überprüfen der Düsen und Zuführleitungen erforderlich ist.

Ist die Ursache der Abweichung beseitigt, kann dann der normale Betrieb etwa mit den veränderten Behandlungsparametern aus Schritt 248 im Schritt 202 fortgesetzt werden oder nach manueller Beseitigung der Ursache der Abweichung der Betrieb mit den ursprünglichen Behandlungsparametern fortgeführt werden.

Zum besseren Verständnis werden nachstehend noch einige beispielhafte Ausführungsformen beschrieben, mit denen ein Feststellen von Ursachen und darauffolgender Steuerung der Behälterbehandlungsmaschine erreicht werden kann.

Wird eine Reduktion der Transportgeschwindigkeit der Behälter entlang der Transporteinrichtung bei gleichbleibendem Drehmoment einer Antriebseinrichtung der Transporteinrichtung festgestellt, kann dies auf Verschleiß oder Verunreinigung der Transporteinrichtung hindeuten. Alternativ kann ein festgestellter Anstieg der Drehmomente einer Antriebseinrichtung der Transporteinrichtung bei gleichbleibender Transportgeschwindigkeit der Behälter entlang der Transporteinrichtung auf Verschleiß oder Verunreinigung der Transporteinrichtung hindeuten. Im Falle einer Reinigungsmaschine kann dies beispielsweise ein Versteinen von Teilen der Transporteinrichtung als Ursache haben. Um dieses zu lösen, kann vorgesehen sein, dass die Behälterbehandlungsmaschine so gesteuert wird, dass eine erhöhte Verschleppung des Reinigungsmediums erreicht wird oder die Nachbehandlung kann mit einer erhöhten Temperatur durchgeführt werden, um so die Versteinungen zu beseitigen.

Wird eine erhöhte Leistungsaufnahme oder eine verminderte Transportgeschwindigkeit in der Transporteinrichtung festgestellt, kann dies auch an Fehlfunktionen der Antriebe oder allgemeinen Verschleißerscheinungen von Transportketten oder Ähnlichem liegen. Kommt dies als mögliche Ursache infrage, kann der Bediener angewiesen werden, Antriebe oder bewegliche Komponenten wie beispielsweise Ketten der Transporteinrichtung zu überprüfen.

Wird als Zustandsparameter ein Aufheizen eines Prozessmediums über die Zeit vorgesehen, kann damit Rückschluss auf Heizelemente und/oder Wärmetauscher als mögliche Ursache einer Veränderung dieser Zustandsparameter ermöglichen. Ein Bediener kann dann beispielsweise angewiesen werden, Heizelemente auf ihre Funktionalität und etwa hinsichtlich möglicher Verkalkungen oder Wärmetauscher auf Verunreinigungen innerhalb der medienführenden Leitungen hin zu überprüfen.

Ist ein Sensor vorgesehen, der die chemische Zusammensetzung von Prozessmedien bestimmen kann und zeigen sich hier Abweichungen, kann dies beispielsweise auf Defekte oder bevorstehende Defekte in Zuführleitungen für die einzelnen Komponenten der Prozessmedien hindeuten. Dies kann genutzt werden, um den Bediener anzuweisen, diese Zuleitungen oder Ventile zu prüfen.

Wird als Zustandsparameter eine Temperatur eines Behälters nach Durchlaufen der Behälterreinigungsmaschine gewählt, kann dies einen Rückschluss auf die Transportgeschwindigkeit oder die Medientemperatur innerhalb der Behälterreinigungsmaschine in einzelnen Behandlungseinheiten, wie beispielsweise den Tauchbädern oder den Spritzdüsen, die bereits erwähnt wurden, ermöglichen. Um diese Ursache zu beseitigen, kann beispielsweise ein Bediener angewiesen werden, bestimmte Medientemperaturen gezielt zu messen.

Als Zustandsparameter können beispielsweise auch Durchflussmengen oder Temperaturen von Prozessmedien vor oder nach einer Behandlung vorgesehen sein. Werden hier Abweichungen festgestellt, so kann dies darauf hindeuten, dass entweder Energieverluste oder Leckagen auftreten. Auch dies kann dann einem Bediener angezeigt werden, um eventuelle Leitungsbrüche zu prüfen.

Als weitere Zustandsparameter kann beispielsweise auch die Anzahl der der Maschine zugeführten und der der Maschine abgeführten Behälter verwendet werden. Zeigt sich hier eine Differenz, kann dies auf Verlust von Behältern, wie beispielsweise Behälterbruch, hindeuten und dem Bediener als mögliche Ursache ausgegeben werden. Alternativ oder zusätzlich kann dem Bediener vorgeschlagen werden, die Behälterreinigungsmaschine zu reinigen.

Weiterhin kann beispielsweise auch die Alkalität eines Prozessmediums und/oder deren zeitliche Veränderung als Zustandsparameter verwendet werden, wobei die Alkalität zu einem gegebenen Zeitpunkt beispielsweise durch Messung der elektrischen Leitfähigkeit und/oder des pH-Werts bestimmt wird. Zeigt sich hier eine Veränderung, kann dies auf eine erhöhte Belagsbildung in der Maschine hindeuten und dem Bediener als mögliche Ursache ausgegeben werden, gegebenenfalls mit einem Hinweis auf entsprechende Maßnahmen für manuelle und/oder automatische Reinigungsprozesse.

## Patentansprüche

1. Behälterbehandlungsmaschine zum Behandeln von Behältern, die Behälterbehandlungsmaschine umfassend wenigstens zwei Behandlungseinheiten zum Behandeln von Behältern, wenigstens einen Sensor zum Bestimmen eines Zustandsparameters, der indikativ für einen Zustand des Behälters nach und/oder während der Behandlung und/oder für einen Betriebszustand wenigstens einer Behandlungseinheit ist, und eine Steuereinheit, wobei die Steuereinheit ausgebildet ist, basierend auf dem Zustandsparameter und einem digitalen Abbild der Behälterbehandlungsmaschine sowie wenigstens einem Betriebsparameter der Behandlungseinheiten festzustellen, ob eine Abweichung im Betrieb der Behälterbehandlungsmaschine vorliegt und welche Ursache die Abweichung besitzt und basierend darauf die Behälterbehandlungsmaschine zu steuern.

2. Behälterbehandlungsmaschine nach Anspruch 1, wobei das Steuern der Behälterbehandlungsmaschine ein Verändern wenigstens eines Betriebsparameters und/oder eine für die festgestellte Abweichung indikative Ausgabe an einen Bediener umfasst.

3. Behälterbehandlungsmaschine nach Anspruch 1 oder 2, wobei die Steuereinheit ausgebildet ist, unter Verwendung eines Vorhersagemoduls umfassend ein Wahrscheinlichkeitsmodell oder ein neuronales Netz oder eine Fuzzy Logic festzustellen, ob eine Abweichung vorliegt und welche Ursache die Abweichung besitzt.

4. Behälterbehandlungsmaschine nach Anspruch 3, wobei das Vorhersagemodul ausgebildet ist, basierend auf festgestellten Abweichungen im Betrieb der Behälterbehandlungsmaschine zu lernen.

5. Behälterbehandlungsmaschine nach einem der Ansprüche 1 bis 4, wobei die Abweichung für einen Betriebsfehler oder einen bevorstehenden Betriebsfehler indikativ ist.

6. Behälterbehandlungsmaschine nach einem der Ansprüche 1 bis 5, wobei die Behälterbehandlungsmaschine eine Reinigungsmaschine ist oder eine Reinigungsmaschine umfasst.

7. Verfahren zum Steuern einer Behälterbehandlungsmaschine, die Behälterbehandlungsmaschine umfassend wenigstens zwei Behandlungseinheiten zum Behandeln von Behältern, wenigstens einen Sensor zum Bestimmen eines Zustandsparameters, der indikativ für einen Zustand des Behälters nach oder während der Behandlung oder für einen Betriebszustand wenigstens einer Behandlungseinheit ist, und eine Steuereinheit, wobei die Steuereinheit basierend auf dem Zustandsparameter und einem digitalen Abbild der Behälterbehandlungsmaschine sowie wenigstens einem Betriebsparameter der Behandlungseinheiten feststellt, ob eine Abweichung im Betrieb der Behälterbehandlungsmaschine vorliegt und welche Ursache die Abweichung besitzt und basierend darauf die Behälterbehandlungsmaschine steuert.

8. Verfahren nach Anspruch 7, wobei das Steuern der Behälterbehandlungsmaschine ein Verändern wenigstens eines Betriebsparameters und/oder eine für die festgestellte Abweichung indikative Ausgabe an einen Bediener umfasst.

9. Verfahren nach Anspruch 8, zweite Alternative, wobei die Ausgabe eine Ausgabe von wenigstens zwei mögliche Ursachen für die Abweichung umfasst.

10. Verfahren nach einem der Ansprüche 7 bis 9, wobei die Steuereinheit unter Verwendung eines Vorhersagemoduls umfassend ein Wahrscheinlichkeitsmodell oder ein neuronales Netz oder eine Fuzzy Logic feststellt, ob eine Abweichung vorliegt und welche Ursache die Abweichung besitzt.

11. Verfahren nach Anspruch 10, wobei das Vorhersagemodul basierend auf festgestellten Abweichungen im Betrieb der Behälterbehandlungsmaschine lernt.

12. Verfahren nach Anspruch 10 oder 11, wobei das Vorhersagemodul und/oder das digitale Abbild bei einer Inbetriebnahme der Behälterbehandlungsmaschine verifiziert wird.

13. Verfahren nach einem der Ansprüche 7 bis 12, wobei die Abweichung für einen Betriebsfehler oder einen bevorstehenden Betriebsfehler indikativ ist.

14. Verfahren nach einem der Ansprüche 7 bis 13, wobei die Behälterbehandlungsmaschine eine Reinigungsmaschine ist oder eine Reinigungsmaschine umfasst.

15. Verfahren nach einem der Ansprüche 7 bis 14, wobei das Verfahren ein Feststellen von einer Abweichung für jeden behandelten Behälter oder in vorgegebenen zeitlichen Abständen während des Betriebs der Behälterbehandlungsmaschine umfasst.
